# EUROPÄISCHE PATENTSCHRIFT

(11) **EP 3 992 235 B1**
(45) Veröffentlichungstag und Bekanntmachung des Hinweises auf die Patenterteilung: **19.08.2026**
(21) Anmeldenummer: 21205323.5
(22) Anmeldetag: 28.10.2021
(51) Int. Cl.: C08K 3/38, C08L 83/04, C08J 3/20, C08J 3/24, C08J 3/28, C08K 5/00

(54) **VULKANISATIONSVERFAHREN UND VULKANISATIONSHILFSSTOFF**
VULCANIZATION METHOD AND VULCANIZATION AID
PROCÉDÉ DE VULCANISATION ET ADDITIF DE VULCANISATION

(30) Priorität: 29.10.2020 DE 102020128416
(43) Veröffentlichungstag der Anmeldung: 04.05.2022
(73) Patentinhaber: ContiTech Elastomer-Beschichtungen GmbH, 30175 Hannover (DE); Sindlhauser Materials GmbH, 87437 Kempten (DE)
(72) Erfinder: HUBRICH, Jonathan, 37077 Göttingen (DE); STORRE, Jens, 37176 Nörten-Hardenberg (DE); SINDLHAUSER, Peter, 87463 Dietmannsried (DE); NGOUMENI, Rodrigue, 87668 Rieden (bei Kaufbeuren) (DE); YAVUZ, Volkan, 87600 Kaufbeuren (DE)
(74) Vertreter: VKK Patentanwälte PartG mbB

(56) Entgegenhaltungen:
- EP-A1- 0 597 613
- DE-A1- 102018 214 255
- DE-A1- 102018 219 302
- GB-A- 2 296 718

## Beschreibung

Um thermoplastische Naturkautschuke und Synthesekautschuke durch Bildung kovalenter Bindungen zwischen den Makromolekülen der Edukte in elastomere Produkte zu überführen, und damit die freie Bewegung der Makromoleküle gegeneinander zu verhindern, sind aufwendige Vulkanisationsverfahren erforderlich.

Diese Vulkanisationsverfahren werden zur Erreichung einer möglichst kurzen Reaktionsdauer bei erhöhter Temperatur in Batch-Verfahren und bei erhöhter Temperatur und ggf. erhöhtem Druck in kontinuierlichen Verfahren durchgeführt. Bislang wurde die für das jeweilige Vulkanisationsverfahren benötigte Wärme über Wärmeträgermedien wie Wasser, Öl, Heißdampf, Salzbäder, erhitzte Betten aus Glaskugeln oder elektrische Energie in die Reaktionsmischung eingetragen, auch unter Einsatz einer geheizten metallischen Form oder Walze, über die ein entsprechender Kautschukkörper geführt wird. Für Spezialfälle ist auch ein induktiver Wärmeeintrag über UHF (ultra-high frequency) bekannt, der hohe Energieverluste aufweist.

Apparativ wird die Vulkanisation unter anderem in Autoklaven, vertikalen oder horizontalen Kesseln, in Vulkanisierpressen und kontinuierlich arbeitenden Maschinen (AUMA, automatische Mattenmaschine) durchgeführt.

In Abhängigkeit von der Art des zu vulkanisierenden Kautschuks werden neben Schwefel auch Peroxide, Metalloxide und energiereiche Strahlung von 50 bis 300 Gy wie ultrahochfrequente Mikrowellen zur Vernetzung eingesetzt. Daneben werden auch Aktivatoren, Füllstoffe, Pigmente und Farbstoffe, Weichmacher, Emulgatoren, Flammschutzmittel, Faktis und andere chemische Reaktionsstoffe in die zu vulkanisierenden Mischung eingebracht.

Vulkanisiert werden hierbei sowohl extrudierte Kautschuke als auch Kautschukbahnen als auch mit Kautschuken umhüllte oder ausgestattete Produkte. Vulkanisationsverfahren haben daher eine große wirtschaftliche Bedeutung in unterschiedlichsten Produktbereichen, beispielsweise bei aus Kalandern stammende Gummiplatten oder -filmen, bei durch Eintauchen auf einer Form gebildeten Artikeln, bei mit Kautschuk überzogenen Metallteilen, bei Spritzgußartikel, Schläuchen, Platten, Schuhteilen, Teppichen, Geweben, Kabeln, Handschuhen und anderen mehr.

Es ist daher Aufgabe der Erfindung, ein verbessertes Vulkanisationsverfahren anzugeben sowie eine hierfür einsetzbare Masse. Die Verfahrensaufgabe wird gelöst durch ein Verfahren zur Vulkanisation von vulkanisierbaren Edukten aufweisend die Schritte: - Bereitstellen einer Masse aus vulkansierbaren Edukten und einem oder mehreren Vulkanisierhilfsstoffen, die elektromagnetische Strahlung mit Wellenlängen oberhalb von 640 nm absorbieren, und - Bestrahlen der Masse mit der zu der Absorptionsfähigkeit des einen oder der mehreren Vulkanisierhilfsstoffen passenden Wellenlängen, wobei die zu vulkanisierenden Edukte einzeln oder in Kombination gewählt werden aus der Gruppe gebildet durch Naturkautschuke, Silikonkautschuke, Synthesekautschuke wie EPDM, NBR, SBR, EPM, EVA, EVM, wobei als Vulkanisierhilfsstoffe Metallboride insbesondere LaB₆, modifizierte Metallboride, insbesondere mit SiO₂ modifiziertes LaB₆, Metallpartikel magnetische und magnetisierbare (ferromagnetische) Stoffe und Mischungen aus den vorgenannten sowie ionische Flüssigkeiten sowie wolframbasierte Nanomaterialien und Wolframoxide des allgemeinen Typs MₓWO₃₋ₓ mit M insbesondere NH₄, H, Li, Na, K, Rb, Cs, Ca, Ba, Sr, Fe, Sn, Mo, Nb, Ta, Ni, Pd, Pt, Cu, Ag, Au, Zn, Cd, Al, Ga, In, TI, eingesetzt werden, und wobei die Vulkanisierhilfsstoffe mit einem Anteil zwischen 0,001 Gew.-% bis 25 Gew.-%, bevorzugt mit 0,01 Gew.-% bis 10 Gew.-%, an der vulkanisierenden Masse mittels einer Dispersion eingebracht werden.

Mit großem Vorteil nehmen die Moleküle des oder der erfindungsgemäßen Vulkanisierhilfsstoffe die zugeführte elektromagnetische Strahlung auf und geben diese insbesondere in Form kinetischer Energie an die Moleküle der sie umgebenden Matrix aus zu vulkanisierendem Edukt weiter, wodurch selektiv und zielgenau in apparativ einfacherer Weise Energie - in Form von Wärme - in das Reaktionssystem eingebracht wird. Mit großem Vorteil wird so eine effiziente, zielgerichtete und wenig Streuverluste aufweisende Einkopplung von Energie erreicht, wodurch die Verfahrenskosten deutlich gesenkt werden, da nicht zusätzlich zur Masse unspezifisch Maschinenteile und dergleichen mit erwärmt werden müssen oder dies nur in geringerem Maße. Mit besonders großem Vorteil ermöglicht dieses Verfahren auch eine ortsungebundene Vulkanisation, insbesondere auch in bestimmten Fällen die Einsparung des Auma-Verfahrensschrittes, da die Energieeinkopplung durch an anderem Ort anordenbare Energiequellen erfolgen kann.

Die Erfindung ermöglicht damit die gezielte Einkopplung bestimmter elektromagnetischer Strahlung in die Matrix der zu vulkanisierenden Kautschukmoleküle. Diese reicht von NIR - ggf. sogar von etwa 600 nm - bis hin zu elektrischem Strom bzw. zu entsprechenden Magnetfeldern, also deutlich größeren Wellenlängen.

Die zugeführte elektromagnetische Energie stammt in Weiterbildung der Erfindung aus Induktions-, Infrarot- und Mikrowellenquellen. Insbesondere erfindungsgemäß nach einer Weiterbildung der Erfindung ist der Einsatz von Infrarotquellen, vor allem solche des nahen Infrarots (NIR) mit einer Wellenlänge zwischen 800 nm und 2.000 nm.

Nutzt das erfindungsgemäße Verfahren NIR-Wellenlängen, sind die erfindungsgemäßen Energieabsorptionshilfsstoffe Metallboride, besonders relevant ist hier LaB₆, modifizierte Metallboride, insbesondere mit SiO₂ modifiziertes LaB₆, sowie Wolframoxide und Ruß. Auch Mischungen hieraus sind erfindungsgemäß. Wolframoxid-basierte Nanomaterialien sind neben LaB₆ besonders bevorzugte IR-Absorber. Die absorbierte elektromagnetische Strahlung wird auch durch Oberflächenplasmonresonanz in Wärme umgewandelt abgegeben. Die Absorption im Wellenlängenbereich zwischen 780 nm und 2.400 nm wurde durch Wolframoxide des allgemeinen Typs MₓWO₃₋ₓ mit M insbesondere NH₄, H, Li, Na, K, Rb, Cs, Ca, Ba, Sr, Fe, Sn, Mo, Nb, Ta, Ni, Pd, Pt, Cu, Ag, Au, Zn, Cd, Al, Ga, In, TI, wobei NH4, H, Cs, Rb, K, Na besonders relevant sind. Der Absorptionsbereich und die Absorptionsintensität werden dabei erfindungsgemäß durch Variation von x und auch durch Variation von M erreicht. Hierbei hat vor allem die die Behandlungstemperatur des WO₃₋ₓ-Vorläufers einen Einfluss auf den Betrag von x. Das so mit variablem x hergestellte WO₃₋ₓ, wird dann mit einem gewünschten Metallsalz als M-Vorläuferverbindung umgesetzt und ggf. auf eine nanopartikuläre Größe von < 100 nm gebracht.

Nutzt das erfindungsgemäße Verfahren Mikrowellen, sind die erfindungsgemäßen Energieabsorptionshilfsstoffe insbesondere Metallpartikel, Nutzt das erfindungsgemäße Verfahren eine induktive Einkopplung von Energie, sind die erfindungsgemäßen Energieabsorptionshilfsstoffe Metallpartikel aus beispielsweise Aluminium, magnetische und magnetisierbare (ferromagnetische) Stoffe.

Auch ionische Flüssigkeiten sind erfindungsgemäße Energieabsorptionshilfsstoffe, sofern diese entsprechend elektromagnetische Energie absorbieren können.

Als zu vulkanisierende Edukte sind erfindungsgemäß Silikonkautschuke, Naturkautschuk (NK) und Synthesekautschuke wie EPDM, NBR, SBR, EPM, EVA, EVM sowie die jeweilig zugehörigen Vernetzungsmittel erfindungsgemäß.

In Weiterbildung des erfindungsgemäßen Verfahrens ist vorgesehen, dass der Vulkanisierhilfsstoff homogen in die Matrix eingebracht wird, wobei hierunter eine im üblichen Einmischvorgang erreichbare Homogenität verstanden wird.

Erfindungsgemäß sind diese Hilfsstoffe mit 0,001 Gew.-% bis 25 Gew.-% in der zu vulkanisierenden Masse vorhanden, bevorzugt mit 0,01 Gew.-% bis 10 Gew.-%, jeweils bezogen auf das Gesamtgewicht der zu vulkanisierenden Masse.

Der Schritt des Einbringens des Vulkanisierhilfsstoffes in das zu vulkanisierende Edukt erfolgt in einer Dispersion, insbesondere von LaB₆-Nanopartikeln in einem organischen oder wässrigen Dispergiermittel, die in einer Weiterbildung der Erfindung eingesetzt werden. Die organischen Dispergiermittel sind bevorzugt Alkohole und Öle. Unter den Alkoholen ist Isopropanol bevorzugt, unter den Ölen die Silikonöle, insbesondere solche, die unter der Bezeichnung Dehesive im Handel erhältlich sind. Die Dispersion weist in einer Weiterbildung der Erfindung falls erforderlich weiter geeignete Additive wie Schaumbrecher, Stabilisierer oder ähnliches auf, die in Abhängigkeit vom Dispergiermittel und auch von der energieeinkoppelnden Substanz gewählt werden. Im Falle einer wässrigen Dispersion und einer alkoholischen Dispersion wird das Dispergiermittel während oder nach der Einbringung in das zu vulkanisierende Edukt entfernt, insbesondere destillativ oder durch Trocknen entfernt.

In Weiterbildung der Erfindung ist ein Schritt der Nachtemperierung der vulkanisierten Produkte vorgesehen, insbesondere unter Einsatz von NIR-Strahlung, der bei einigen vulkanisierten Produkten zu deren Eigenschaftsverbesserung wünschenswert sein kann.

Wieviel Wärme von dem Vulkanisierhilfsstoff in die Matrix eingebracht werden kann, hängt insbesondere bei LaB₆ von dessen Partikelform, dessen Partikelgröße und -konzentration ab sowie natürlich von der Bestrahlungsdauer und der Leistungsdichte der eingesetzten Strahlungsquelle, die ein Laser, einem Emitter oder eine LED sein kann, wobei letztere bevorzugt ist. Die emittierte Strahlung weist dabei in jedem Fall mit Vorteil kein breites Wellenlängenspektrum auf, sondern eines, das auf die Absorptionseigenschaften des jeweiligen Vulkanisierhilfsstoffes optimiert ist, der diese elektromagnetische Strahlung absorbiert, hierdurch erwärmt wird und diese anschließend an seine Umgebung abgibt. Hierdurch wird die Polymermatrix praktisch nicht beansprucht, bzw. beschädigt.

Die Aufgabe der Erfindung wird auch gelöst durch eine vulkanisierbare Masse entsprechend den Ansprüchen 7 bis 8, die neben den geschilderten erfindungsgemäßen Vulkanisierhilfsstoffen eine Matrix, oder mit anderen Worten die zu vulkanisierenden Edukte Naturkautschuke, Silikonkautschuke, Synthesekautschuke wie EPDM, NBR, SBR, EPM, EVA, EVM enthält.

### Beispiel 1

In einem ersten Versuch wurden zwei LaB₆-Dispersionen in Isopropanol hergestellt, wobei das jeweils eingesetzte nanopartikuläre LaB₆ einen mittleren Partikeldurchmesser von 120 nm aufwies. Die eine Dispersion enthielt einen doppelt so hohen Gewichtsanteil an LaB₆ als die andere.

Als zu vulkanisierendes Edukt wurde ein blockförmiger, peroxidisch vernetzender Festsilikonkautschuk, erhältlich unter der Bezeichnung Elastosil, in Gegenwart von Isopropanol zu Körnern mechanisch zerkleinert. Anschließend wurden die hergestellten, leicht grünlichen LaB₆-Dispersionen jeweils unter Rühren bei Raumtemperatur auf den und in den Kautschukkörnern verteilt, da die Dispersion auch in die Poren des Materials diffundiert. Anschließend wurde das Dispergiermittel Isopropanol durch Erwärmen auf 90°C entfernt. Die so erhaltenen Produkte wiesen einen LaB₆-Anteil an der gesamten Masse aus Matrix und Vulkanisierhilfsstoff von 0,05 Gew.-% bzw. 0,1 Gew.-% auf. Aus den so hergestellten erfindungsgemäßen Massen wurden jeweils Testkörper mit 1 mm und mit 6,5 mm Dicke hergestellt und deren Extinktion sowie Wärmeentwicklung verglichen.

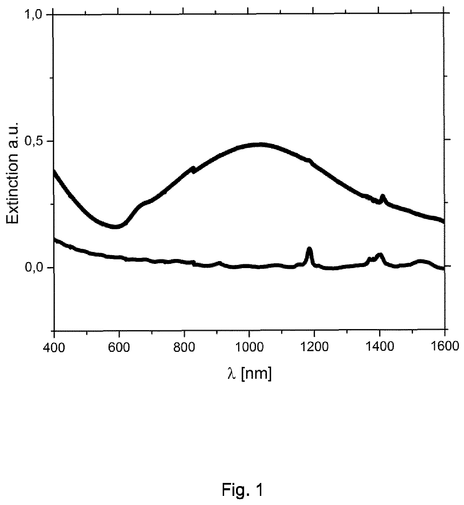

Wie Fig. 1 entnommen werden kann, zeigt die Masse mit einem LaB₆-Anteil von 0,05 Gew.-% einen breiten Extinktionspeak zwischen 700 nm und 1.400 nm, wohingegen das reine Elastosil ein Extinktionsmaximum bei 1.200 nm mit einer Peakbasisbreite von 100 nm zeigt und dessen Extinktion insgesamt deutlich geringer als diejenige der erfindungsgemäßen Masse ausfällt. Zusätzlich weist es ein deutlich niedrigeres Extinktionsmaximum im Bereich zwischen 1.350 nm und 1.450 nm auf. Beim Vergleich der Extinktion gleichdicker Körper lag die Extinktion der erfindungsgemäßen Masse aus der Matrix Elastosil und dem zugemischten Vulkanisierhilfsstoff LaB₆ um einen Faktor von ungefähr 6 über derjenigen des Vergleichskörpers aus reinem Silikonkautschuk.

Beide erfindungsgemäßen Massen sowie die Vergleichsmasse aus reinem Silikonkautschuk wurden mit einem Laser bei 980 nm mit einer Leistung zwischen 0,45 W und 11 W bestrahlt.

Bei beiden erfindungsgemäßen Massen wurde eine deutliche Wärmeentwicklung festgestellt, wohingegen der unter gleichen Bedingungen bestrahlte Vergleichskörper aus reinem Silikonkautschuk keine Wärmeentwicklung zeigte.

Die folgende Tabelle 1 gibt die Messergebnisse wieder:

| Laserleistung | 0,05 Gew-% | 0.1 Gew-% | Silikonkautschuk |
|---|---|---|---|
| [W] | [°C] | [°C] | [°C] |
| 0,45 | 48 | 42 | 24 |
| 0,50 | 78 | 110 | 24 |
| 0,55 | 152 | 175 | 24 |
| 0,60 | 194 | 236 | 24 |

Es zeigt sich, dass die Wärmeentwicklung mit steigender LaB₆-Konzentration in der Masse wächst. Sie wächst ebenfalls mit steigender Dicke des Probekörpers, wie die nachfolgende Tabelle 2 wiedergibt:

**Tabelle 2: Temperaturentwicklung einer erfindungsgemäßen Masse mit einer 0,1-Gew.-% LaB₆-Dispersion in unterschiedlicher Probenkörperdicke in Abhängigkeit der Laserleistungsdichte**

| Leistungsdichte | 1 mm | 6,5 mm |
|---|---|---|
| [W/mm²] | [°C] | [°C] |
| 0,03 | 65 | 75 |
| 0,04 | 100 | 165 |
| 0,05 | 140 | > 250 |

Schließlich wurde dieser Versuch bei ansonsten unveränderten Parametern mit einer LED mit 3.8W, einer Emissionswellenlänge von 980 nm und einem Abstand zur Probe von 2 cm vergleichend durchgeführt. Auch hier zeigt sich eine Erwärmung auf über 250°C. Somit konnte gezeigt werden, dass das Einmischen der LaB₆-Partikel in Elastosil durchführbar ist und zu einer Temperaturentwicklung bei Bestrahlung mit passender Wellenlänge führt.

Es zeigte sich, dass sowohl bei höherem LaB₆-Anteil in einer Masse und gleichgebliebener Laserleistungsdichte als auch bei gleichem LaB₆-Anteil in einer Masse und höherer Leistungsdichte mehr Wärme im Testkörper erzeugt wurde. Es konnten Temperaturen von >250°C in der erfindungsgemäßen Masse erzeugt werden.

Schließlich zeigte ein Vergleichsversuch auch, dass eine reine Auftragung einer LaB₆-Dispersion auf die Oberfläche eines kompakten Körpers aus dem Silikonkautschuk zwar ebenfalls zu einer Wärmeentwicklung führt, diese jedoch deutlich geringer als bei homogener Verteilung in der gesamten Masse ausfällt.

### Beispiel 2

In diesem Ausführungsbeispiel wurden zwei erfindungsgemäße vulkanisierbare Massen mit LaB₆ als energieeinkoppelndem Vulkanisierhilfsstoff in zwei Konzentrationen und dem Silikonkautschuk aus Beispiel 1 hergestellt, wobei LaB₆ in einem stabilisierungsmittelfreien Silikonöl als Dispergiermittel dispergiert wurde. Letzteres ist erhältlich unter der Bezeichnung Dehesive 915. Nach Einbringung der Dispersion in das zu vulkanisierende Edukt wurde auf den Schritt des Entfernens des Dispergiermittels verzichtet. LaB₆ in VA1 wies dabei einen Gewichtsanteil von < 0,1 Gew.-% auf. Der Gewichtsanteil von LaB₆ in VA2 war größer als der in VA1 aber kleiner als 0,1 Gew.-%.

Es zeigte sich, dass auch mit dieser Dispersion die gleichen positiven Ergebnisse wie im Beispiel 1 erreicht werden konnten, wie die nachfolgende Tabelle 3 wiedergibt.

**Tabelle 3:**

| [W] | VA1 | VA2 | Silikonkautschuk |
|---|---|---|---|
| | [°C] | [°C] | [°C] |
| 0,45 | 23 | 32 | 23 |
| 0,60 | 23 | 58 | 23 |
| 0,70 | 38 | 78 | 23 |
| 0,80 | 40 | 96 | 23 |
| 1,00 | 50 | 125 | 23 |
| 1,20 | 58 | 163 | 23 |
| 1,30 | 60 | 182 | 23 |

Dieses Ausführungsbeispiel zeigt ebenfalls die Langzeitstabilität der erfindungsgemäßen vulkanisierbaren Masse, da der Versuch VA2 ebenfalls mit einer Masse durchgeführt wurde, die ein Jahr vor Versuchsdurchführung hergestellt wurde.

### Beispiel 3

Bei diesem Ausführungsbeispiel wurde ein Ethylen-Vinylacetat-Copolymer (EVM-Elastomer) als zu vulkanisierendes Edukt eingesetzt, das unter der Bezeichnung Levapren im Handel erhältlich ist.

Wie oben wurde eine Masse mit einem Anteil von 0,05 Gew.-% LaB₆ hergestellt und deren Eigenschaften mit einer reinen EVM-Masse verglichen. Die Testkörper beider Massen waren jeweils 1 mm dicke Platten. Da Levapren üblicherweise für Gewebebeschichtungen bei 170°C, 4 bar Druck für die Dauer von 10 min in einer Walze vulkanisiert wird, wurde zu Vergleichszwecken der erfindungsgemäße Testkörper zwischen zwei Gewebeschichten gelegt und mit demselben Laser wie aus Beispiel 1 und 2 punktuell bestrahlt.

Die Ergebnisse gibt die Tabelle 2 wieder:

| [W] | 0,05 Gew-% | Levapren | Gewebe |
|---|---|---|---|
| | [°C] | [°C] | [°C] |
| 0,45 | 37 | 26 | 26 |
| 0,50 | 52 | 26 | 26 |
| 0,55 | 73 | 26 | 26 |
| 0,60 | 94 | 27 | 26 |
| 0,85 | 200 | 33 | 28 |

Das Gewebe zeigte keinerlei Oberflächenveränderung, die bestrahlten Stellen zeigten eine Verklebung des zwischen den Gewebelagen aufgenommenen Testkörpers mit diesen. Die bestrahlten Stellen blieben dabei farblos.

Dies zeigt mit ganz großem Vorteil, dass das erfindungsgemäße Verfahren und die erfindungsgemäße Masse dazu geeignet sind, kostengünstigere Vulkanisationsverfahren anzugeben. Insbesondere kann ein Vulkanisieren unter Druck, genauso wie der Einsatz von ortsgebundenen, großen Maschinen vermieden werden. Die unvulkanisierte Masse kann so am Verwendungsort beispielsweise als Isoliermittel um Rohre gelegt und vor Ort vulkanisiert mittels eines **NIR-**Strahlers vulkanisiert werden.

## Patentansprüche

1. Verfahren zur Vulkanisation von vulkanisierbaren Edukten aufweisend die Schritte:
- Bereitstellen einer Masse aus vulkansierbaren Edukten und einem oder mehreren Vulkanisierhilfsstoffen, die elektromagnetische Strahlung mit Wellenlängen oberhalb von 640 nm absorbieren,
- Bestrahlen der Masse mit der zu der Absorptionsfähigkeit des einen oder der mehreren Vulkanisierhilfsstoffen passenden Wellenlängen,
- wobei die zu vulkanisierenden Edukte einzeln oder in Kombination gewählt werden aus der Gruppe gebildet durch Naturkautschuke, Silikonkautschuke, Synthesekautschuke wie EPDM, NBR, SBR, EPM, EVA, EVM, wobei
- als Vulkanisierhilfsstoffe Metallboride insbesondere LaB₆, modifizierte Metallboride, insbesondere mit SiO₂ modifiziertes LaB₆, Metallpartikel magnetische und magnetisierbare (ferromagnetische) Stoffe und Mischungen aus den vorgenannten sowie ionische Flüssigkeiten sowie wolframbasierte Nanomaterialien und Wolframoxide des allgemeinen Typs MₓWO₃₋ₓ mit M insbesondere NH₄, H, Li, Na, K, Rb, Cs, Ca, Ba, Sr, Fe, Sn, Mo, Nb, Ta, Ni, Pd, Pt, Cu, Ag, Au, Zn, Cd, Al, Ga, In, TI, eingesetzt werden, und wobei .
- die Vulkanisierhilfsstoffe mit einem Anteil zwischen 0,001 Gew.-% bis 25 Gew.-%, bevorzugt mit 0,01 Gew.-% bis 10 Gew.-%, an der vulkanisierenden Masse mittels einer Dispersion eingebracht werden.

2. Verfahren gemäß Anspruch 1, bei dem die Masse mit Wellenlängen im Bereich von Zentimetern bis Nanometern bestrahlt wird, insbesondere mit Wellenlängen von 780 nm bis 1 mm, vorzugsweise von 800 nm bis 2.000 nm.

3. Verfahren gemäß Anspruch 1 oder 2, bei dem der Schritt der Bestrahlung mittels Induktions-, Infrarot- und/oder Mikrowellenquellen allein oder in Kombination durchgeführt wird.

4. Verfahren gemäß einem der vorherigen Ansprüche, bei dem der oder die Vulkanisierhilfsstoffe homogen in die Matrix eingebracht werden.

5. Verfahren gemäß einem der vorherigen Ansprüche, bei dem die Dispersion ein organisches oder wässriges Dispergiermittel und ggf. Additive aufweist.

6. Verfahren gemäß einem der vorherigen Ansprüche, bei dem ein Schritt der Nachtemperierung erfolgt.

7. Vulkanisierbare Masse aufweisend vulkanisierbare Edukte und einem oder mehrere Vulkanisierhilfsstoffe, die elektromagnetische Strahlung im Wellenlängenbereich von Zentimetern bis Nanometern absorbierend sind, wobei die zu vulkanisierenden Edukte einzeln oder in Kombination gewählt sind aus der Gruppe gebildet durch Naturkautschuke, Silikonkautschuke, Synthesekautschuke wie EPDM, NBR, SBR, EPM, EVA, EVM, wobei die Vulkanisierhilfsstoffe gewählt sind Metallboriden insbesondere LaB₆, modifizierte Metallboride, insbesondere mit SiO₂ modifiziertes LaB₆, Metallpartikel, magnetische und magnetisierbare (ferromagnetische) Stoffe sowie ionische Flüssigkeiten sowie wolframbasierte Nanomaterialien und Wolframoxide des allgemeinen Typs MₓWO₃₋ₓ mit M insbesondere NH₄, H, Li, Na, K, Rb, Cs, Ca, Ba, Sr, Fe, Sn, Mo, Nb, Ta, Ni, Pd, Pt, Cu, Ag, Au, Zn, Cd, Al, Ga, In, TI, wobei der oder die Vulkanisierhilfsstoffe einen Anteil zwischen 0,001 Gew.-% bis 25 Gew.-%, bevorzugt zwischen 0,01 Gew.-% bis 10 Gew.-% an der vulkanisierenden Masse aufweisen.

8. Vulkanisierbare Masse gemäß Anspruch 10, **dadurch gekennzeichnet, dass** die Vulkanisierhilfsstoffe im Wellenlängenbereich von 780 nm bis 1 mm, vorzugsweise von 800 nm bis 2.000 nm absorbierend sind.

## Claims

1. A method for vulcanizing vulcanizable starting materials, comprising the steps of:
- providing a composition of vulcanizable starting materials and one or more vulcanizing auxiliaries which absorb electromagnetic radiation having wavelengths above 640 nm,
- irradiating the composition with the wavelengths which match the absorptivity of the one or more vulcanizing auxiliaries,
- wherein the starting materials to be vulcanized are selected individually or in combination from the group formed by natural rubbers, silicone rubbers, synthetic rubbers such as EPDM, NBR, SBR, EPM, EVA, EVM, wherein
- metal borides, in particular LaB₆, modified metal borides, in particular LaB₆ modified with SiO₂, metal particles and graphite, magnetic and magnetizable (ferromagnetic) substances and mixtures of the abovementioned and ionic liquids and tungsten-based nanomaterials and tungsten oxides of the general type MₓWO₃₋ₓ where M is in particular NH₄, H, Li, Na, K, Rb, Cs, Ca, Ba, Sr, Fe, Sn, Mo, Nb, Ta, Ni, Pd, Pt, Cu, Ag, Au, Zn, Cd, Al, Ga, In, Tl are used as vulcanizing auxiliaries, and wherein
- the vulcanizing auxiliaries are introduced with a proportion of between 0.001% by weight to 25% by weight, preferably with 0.01% by weight to 10% by weight, of the vulcanizing composition by means of a dispersion.

2. The method according to claim 1, wherein the composition is irradiated with wavelengths in the range from centimeters to nanometers, in particular with wavelengths of 780 nm to 1 mm, preferably of 800 nm to 2,000 nm.

3. The method according to claim 1 or 2, wherein the step of irradiation is carried out by means of induction, infrared and/or microwave sources alone or in combination.

4. The method according to any of the preceding claims, wherein the vulcanizing auxiliary or auxiliaries are introduced homogeneously into the matrix.

5. The method according to any of the preceding claims, wherein the dispersion comprises an organic or aqueous dispersant and optionally additives.

6. The method according to any of the preceding claims, wherein a step of post-tempering is carried out.

7. Vulcanizable composition comprising vulcanizable starting materials and one or more vulcanizing auxiliaries which absorb electromagnetic radiation in the wavelength range from centimeters to nanometers, wherein the starting materials to be vulcanized are selected individually or in combination from the group formed by natural rubbers, silicone rubbers, synthetic rubbers such as EPDM, NBR, SBR, EPM, EVA, EVM, wherein the vulcanizing auxiliaries are selected from metal borides, in particular LaB₆, modified metal borides, in particular LaB₆ modified with SiO₂, metal particles, magnetic and magnetizable (ferromagnetic) substances and ionic liquids and tungsten-based nanomaterials and tungsten oxides of the general type MₓWO₃₋ₓ where M is in particular NH₄, H, Li, Na, K, Rb, Cs, Ca, Ba, Sr, Fe, Sn, Mo, Nb, Ta, Ni, Pd, Pt, Cu, Ag, Au, Zn, Cd, Al, Ga, In, Tl, wherein the vulcanizing auxiliary or auxiliaries have a proportion of between 0.001% by weight to 25% by weight, preferably between 0.01% by weight to 10% by weight, of the vulcanizing composition.

8. Vulcanizable composition according to claim 10, wherein the vulcanizing auxiliaries are absorbent in the wavelength range from 780 nm to 1 mm, preferably from 800 nm to 2,000 nm.

## Revendications

1. Procédé de vulcanisation de réactifs vulcanisables, présentant les étapes suivantes :
- mise à disposition d'une masse de réactifs vulcanisables et d'un ou de plusieurs adjuvants de vulcanisation, qui absorbent un rayonnement électromagnétique avec des longueurs d'onde supérieures à 640 nm,
- irradiation de la masse avec les longueurs d'onde adaptées à la capacité d'absorption de l'un ou des plusieurs adjuvants de vulcanisation,
- les réactifs à vulcaniser étant choisis individuellement ou en combinaison dans le groupe formé par les caoutchoucs naturels, les caoutchoucs de silicone, les caoutchoucs synthétiques tels que EPDM, NBR, SBR, EPM, EVA, EVM,
- des borures métalliques, en particulier LaB₆, des borures métalliques modifiés, en particulier LaB₆ modifié avec SiO₂, des particules métalliques et du graphite, des substances magnétiques et magnétisables (ferromagnétiques) et des mélanges des liquides susmentionnés ainsi que des liquides ioniques ainsi que des nanomatériaux à base de tungstène et des oxydes de tungstène du type général MₓWO₃₋ₓ avec M en particulier NH₄, H, Li, Na, K, Rb, Cs, Ca, Ba, Sr, Fe, Sn, Mo, Nb, Ta, Ni, Pd, Pt, Cu, Ag, Au, Zn, Cd, AI, Ga, In, TI, étant utilisés comme adjuvants de vulcanisation, et
- les adjuvants de vulcanisation étant introduits dans une proportion comprise entre 0,001 % en poids et 25 % en poids, de préférence de 0,01 % en poids à 10 % en poids, de la masse à vulcaniser au moyen d'une dispersion.

2. Procédé selon la revendication 1, dans lequel la masse est irradiée avec des longueurs d'onde dans la plage de centimètres à nanomètres, en particulier avec des longueurs d'onde de 780 nm à 1 mm, de préférence de 800 nm à 2 000 nm.

3. Procédé selon la revendication 1 ou 2, dans lequel l'étape d'irradiation est réalisée au moyen de sources d'induction, d'infrarouges et/ou de micro-ondes seules ou en combinaison.

4. Procédé selon l'une quelconque des revendications précédentes, dans lequel le ou les adjuvants de vulcanisation sont introduits de manière homogène dans la matrice.

5. Procédé selon l'une quelconque des revendications précédentes, dans lequel la dispersion comprend un dispersant organique ou aqueux et éventuellement des additifs.

6. Procédé selon l'une quelconque des revendications précédentes, dans lequel une étape de post-tempérage a lieu.

7. Masse vulcanisable comprenant des réactifs vulcanisables et un ou plusieurs adjuvants de vulcanisation, qui absorbent un rayonnement électromagnétique dans la plage de longueurs d'onde de centimètres à nanomètres, les réactifs à vulcaniser étant choisis individuellement ou en combinaison dans le groupe formé par les caoutchoucs naturels, les caoutchoucs de silicone, les caoutchoucs synthétiques tels que EPDM, NBR, SBR, EPM, EVA, EVM, les adjuvants de vulcanisation étant choisis parmi les borures métalliques, en particulier LaB₆, les borures métalliques modifiés, en particulier LaB₆ modifié avec SiO₂, les particules métalliques, les substances magnétiques et magnétisables (ferromagnétiques) ainsi que les liquides ioniques ainsi que les nanomatériaux à base de tungstène et les oxydes de tungstène du type général MₓWO₃₋ₓ avec M en particulier NH₄, H, Li, Na, K, Rb, Cs, Ca, Ba, Sr, Fe, Sn, Mo, Nb, Ta, Ni, Pd, Pt, Cu, Ag, Au, Zn, Cd, AI, Ga, In, TI, le ou les adjuvants de vulcanisation présentant une proportion comprise entre 0,001 % en poids et 25 % en poids, de préférence entre 0,01 % en poids à 10 % en poids, de la masse à vulcaniser.

8. Masse vulcanisable selon la revendication 7, **caractérisée en ce que** les adjuvants de vulcanisation sont absorbants dans la plage de longueurs d'onde de 780 nm à 1 mm, de préférence de 800 nm à 2 000 nm.
